# EUROPEAN PATENT SPECIFICATION

(11) **EP 2 443 296 B1**
(45) Date of publication and mention of the grant of the patent: **10.02.2016**
(21) Application number: 09843929.2
(22) Date of filing: 01.05.2009
(51) Int. Cl.: E04D 13/03, F16B 21/02

(54) **A BURGLAR-PROOF LOCKING DEVICE FOR FASTENING OF A LIGHT DOME TO A SKYLIGHT WINDOW SASH**
EINBRUCHSICHERE VERSCHLUSSVORRICHTUNG ZUR BEFESTIGUNG EINER LICHTKUPPEL AN EINEM KLAPPFENSTERRAHMEN
DISPOSITIF DE VERROUILLAGE INCROCHETABLE POUR ATTACHER UN DÔME D'ÉCLAIRAGE À UN CHÂSSIS DE LANTERNEAU

(43) Date of publication of application: 25.04.2012
(73) Proprietor: VKR Holding A/S, 2970 Hørsholm (DK)
(72) Inventor: PEDERSEN, Torben, Allesen, DK-8700 Horsens (DK)
(74) Representative: Awapatent A/S
(86) International application number: PCT/DK2009/000101
(87) International publication number: WO 2010/124687

(56) References cited:
- WO-A1-2009/076951
- DE-U1- 8 520 377
- FR-A1- 2 217 497
- GB-A- 600 882
- NL-A- 6 600 866
- NL-A- 8 702 790

## Description

The present invention relates to a locking device for fastening of a light dome to a skylight window sash according to the introductory part of claim 1.

To shield off a window portion positioned more or less horizontally in a flat roof it is know to fasten a dome-shaped weather shield or light dome to a sash of the window portion to form a skylight or roof window. The sash is embedded in a frame, which is secured to the roof, the sash and frame together with a pane embedded in the sash forming a window portion of the window or skylight. The purpose of the weather shield is to divert water from rainfall, leaves etc. from the window by means of gravitational forces. The weather shield is typically attached to the sash by means of fasteners in the form of ordinary and/or standard threaded screws or bolts, an oblong part of each screw or bolt being guided through a peripheral hole of the weather shield. A head part of the screw or bolt abuts an upper surface of the weather shield, the oblong part extending through the hole of the weather shield to be fastened in corresponding bores of the sash.

The weather shield is typically transported separately from the sash and mounted on the sash after the window portion has been mounted in the roof. A standard tool such as a screwdriver corresponding to slots of the screws or bolts is used to fasten the screws or bolts through the holes of the weather shield and into the sash. This means, of course, that a similar standard tool can be used to release the screws or bolts, making it possible for a burglar to easily and with little preparation gain access to the window portion, the burglar only needing to carry a standard screwdriver.

A solution to this problem has been disclosed in DE 8617125 U1, which describes a burglar-proof locking device. This locking device is used to fasten a two-layer light dome to a roof. A locking member in the form of an ordinary screw is positioned in the bottom of a hole in a profile with an interior thread. A cap with a corresponding exterior thread is then screwed into the hole, a head part of the cap comprising sloping sides, which eventually abut an upper surface of the light dome, covering the hole and screw in order to prevent the insertion of a standard screwdriver into the hole to protect the window from burglars. The sloping sides of the cap make it difficult to engage a standard tool, such as a wrench, with the cap in order to turn it. However, the cap comprises a notch or slot for a special tool, which can thus be engaged with the cap in order to rotate it such as to release it.

Because of the rotatable cap with sloping sides, the locking device of DE 8617125 U1 has the drawback of being somewhat complicated and voluminous. Further, although the sides are sloping, there is still at risk of a burglar being able to get a decent grip on the cap by means of, for example, an ordinary wrench. Below the sloping sides a strong and rigid supporting construction needs to be provided in order to ensure that the sides can withstand radial forces on the cap. Also, in order to fasten the light dome, first one fastener, i.e. the screw, needs to be fastened, and subsequently, a second fastener, i.e. the cap, needs to be fastened. In other words, two different tools are needed, and the time needed for fastening the light dome is at least doubled in relation to the conventional fastening method described above. During repairs, cleaning or dismounting the window it is equally problematic to release the light dome.

Another locking device for fastening of a light dome is known from DE 29710526 U1, which however does not disclose the use of special tools for release of the locking device.

NL 8702790 A discloses a locking device according to the introductory part of claim 1.

On this background it is the object of the present invention to provide a locking device according to the introductory part of claim 1, which is more secure and easier to attach and detach with a special tool.

To meet this object the locking device according to the present invention is characterized by the features according to the characterizing part of claim 1.

With the locking device according to the invention only the locking means itself needs to be fastened in order to fasten a light dome; no second fastener is necessary, the cap already being attached to the locking means before fastening. This is achieved since the special tool rotates the locking means itself, not the cap. Thus, the time needed for the fastening or releasing operation by means of a special tool is significantly reduced. The locking device according to the invention is smaller and less complicated and thus cheaper to manufacture. Further, because the cap surrounding the visible or engageable part of the locking device is freely rotatable in relation to the locking means, a burglar will not be able to release the locking device by means of an ordinary tool, e.g. a wrench. Thus, the locking device is also made more secure.

The dependent claims define preferred embodiments of the invention according to claim 1.

The invention will be explained in detail in the following by means of examples of embodiments with reference to the schematic drawing, in which
Fig. 1 is a perspective view of an embodiment of a skylight window, which can be provided with one or more burglar-proof locking devices according to the present invention,
Fig. 2 is a cross-sectional view of the window according to Fig. 1,
Fig. 3 is a detail of a cross-sectional view corresponding to that of Fig. 2, the window being provided with a fastener not according to the present invention,
Fig. 4 is a perspective view of the fastener shown in Fig. 3,
Fig. 5 is a side view of the fastener of Fig. 3,
Fig. 6 is an end view of the locking device of Fig. 3 seen from the right of the fastener as shown in Fig. 5,
Fig. 7 is an end view of the fastener of Fig. 3 seen from the left of the fastener as shown in Fig. 5,
Fig. 8 is a perspective view of an embodiment of a locking device according to the present invention, in which a snake-eye tool has been engaged,
Fig. 9 is a sectional side view of the locking device of Fig. 8 taken along the line IX-IX of Fig. 8, and
Fig. 10 is a perspective view of the locking device of Fig. 8 sectioned as in fig. 9.

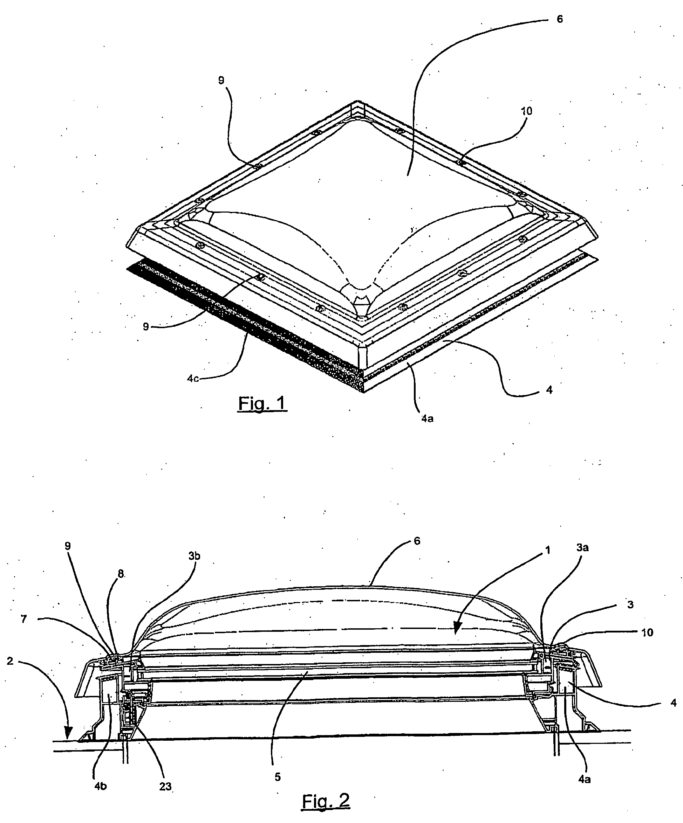

Figs 1 and 2 show different views of a skylight or roof window intended to be mounted in or on a flat roof. In the present context flat roofs are defined as roofs having an inclination in relation to horizontal of less than about 15°. The window comprises a rectangular window portion 1, which is able to rotate about a horizontal axis positioned along a bottom of the skylight (to the lower right in Fig. 1 and to the right in Fig. 2). The window portion 1 is installed in a flat roof 2 and comprises a sash 3 positioned in a frame 4, which are both made up of extruded, hollow PVC profiles. In other embodiments the frame and sash may be in the form of for example extruded aluminium profiles, and they may comprise wooden parts.

The sash 3 comprises a bottom 3a, a top 3b and two side (not shown) sash members and encloses a windowpane 5 with two layers of glazing sandwiching a layer of gas to provide insulation glazing. The frame 4 comprises a bottom 4a, a top 4b and two side frame members, of which only one side frame member, 4c, is shown (in Fig. 1). The bottom sash member 3a is rotatably connected to the bottom frame member 4a by means of two hinges (not shown) defining a rotation axis.

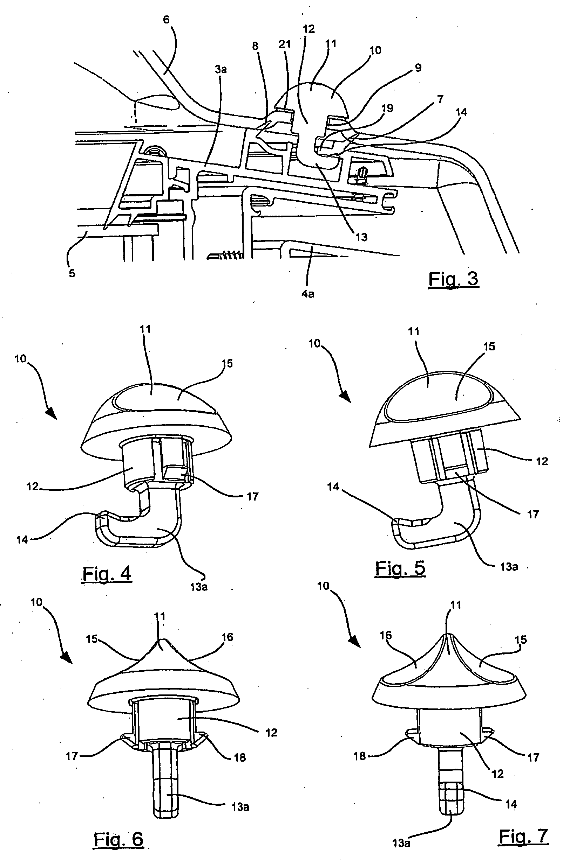

A weather shield or light dome in the form of an acrylic or polycarbonate dome 6 is attached to the sash 3 to protect the window portion 1. Lifting and rotating the sash 3 and dome 6 about the rotation axis by means of a chain operator 23 embedded in the top frame member 4b provides movement between an open and a closed position of the window. The chain operator 23 may be driven automatically and may be radio-controlled. Supporting the dome portion 6 are longitudinally extending sealing projections or weather strips 7, 8, sealing the sash 3 against the dome portion 6, cf. Figs 2 and 3.

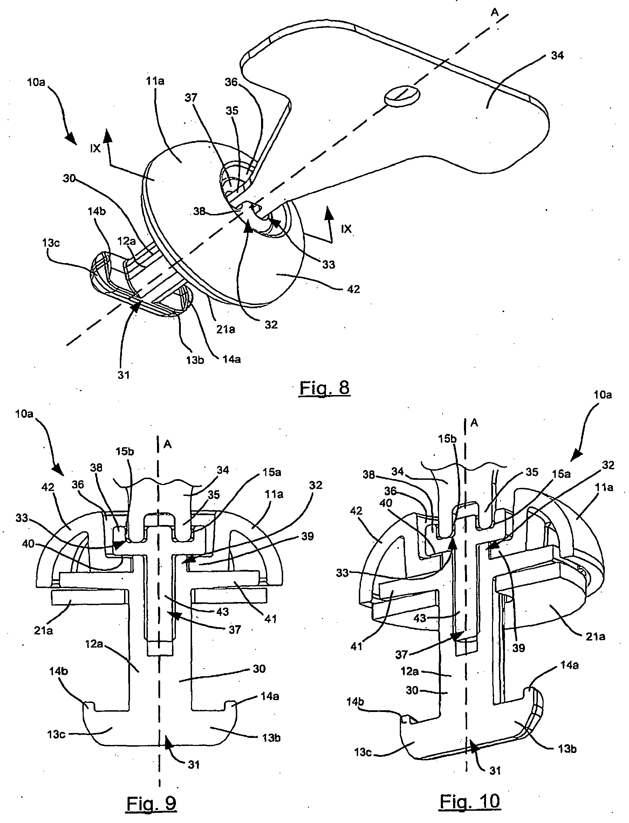

The weather shield 6 comprises peripheral holes 9. In Figs 1 and 2 a non-burglar-proof fastener 10 has been inserted through one of the peripheral holes 9, the fastener 10 being shown in Figs 3 to 7. Note that in the present embodiment similar, not shown fasteners 10 are to be inserted in some of the remaining holes 9 of the weather shield 6 as shown in Fig. 1. In the present embodiment the fastener of one hole 9 on each side of the weather shield 6 is furthermore to be replaced with a locking device 10a (not shown in Figs 1 and 2), i.e. a total number of four locking devices is preferably to be provided. However, any number between one and all of the holes 9 may be provided with a locking device 10a. The locking device 10a is an embodiment of the locking device according to the present invention and is shown in Figs 8 to 10.

The fastener 10 is shown in more detail in Figs 3 to 7. It comprises a head part 11 connected to a connection part 12, the outer dimensions of which correspond to the inner dimensions of the holes 9. The connection part 12 extends into a first fastening means in the form of a clog-shaped radial protrusion 13a with an engagement member in the form of an upwards projecting tip end 14 of said clog shape. The head part 11 comprises grip means in the form of two finger depressions 15, 16. The connection part 12 comprises second fastening means in the form of two oppositely positioned snap locks 17, 18. The fastener 10 is integrally molded from Zytel 80633, i.e. acrylic with 33% glass.

In Figs 2 and 3 the fastener 10 is shown in a locked condition in which it fastens the weather shield 6 to the sash 3. The head part 11 has a lower, flat surface, which is positioned abutting an upper surface of the weather shield 6, the connection part 12 extending through a hole of the weather shield 6 into the bottom sash member 3a. As is visible in Fig. 3 the peripheral hole of this figure is formed in an upwardly protruding dimple 20 of the weather shield 6; the same is the case for all the peripheral holes 9. In the locked position the tip end 14 of the radial protrusion 13 engages a corresponding engagement means of the sash 3 in the form of a downwards protruding longitudinally extending bead 19. The bead 19 extends in the entire circumference of the sash 3, forming a tip end of a likewise longitudinally extending part of the sash, making it somewhat resilient in an upwards direction.

When inserting the fastener into the hole 9 the snap locks 17, 18 are positioned abutting a lower surface of the weather shield 6. Hereby, the lower surface of the head part 11 and the snap locks 17, 18 at all times cooperate to secure the fastener in the hole. To release the fastener 10 from the hole, the snap locks 17, 18 will need to be released from the inside of the weather shield 6.

The finger depressions 15, 16 are adapted such that in the fastened position of the fastener 10 as shown in Figs. 2 and 3 rain water and snow are allowed to readily pass the head part 11.

Between the dimple 20 and the lower surface of the head part 11 a soft plastic gasket member 21 is provided. This gasket member 21 is somewhat resilient, providing for a corresponding resiliency of the fastener 10, which is made use of when fastening or releasing the fastener 10 as is explained in more detail below. In the present embodiment the gasket member 21 is secured, i.e. glued, to the dimple 20; in other embodiments it may form part of the fastener 10.

The tip end 14 is released from the bead 19 of the bottom sash member 3a by means of rotation of the fastener 10. Rotation can be carried out without the use of a separate tool placing a thumb and an index finger of one hand in the finger depressions 15, 16, respectively. The fastener 10 can be rotated either way about the connection part 12, whereby the tip end 14 passes the downwards protruding bead 19, and the fastener 10 and weather shield 6 is released from the sash 3.

From the released position rotating the fastener 10 to snap back to the original, locked position is done in a corresponding manner. The combined resilience of the gasket member 21, longitudinal sealing members 7, 8, bead 19 and fastener 10 itself makes it possible for the tip end 14 to pass the bead 19 with a snapping sound and/or sensation telling a user that the fastener 10 has been fastened or released.

The gasket 21 and sealing members 7, 8 also ensure that the weather shield 6 is watertight in the area of the hole in the weather shield 6.

The fastener may comprise a further radial protrusion corresponding to and protruding oppositely to the radial protrusion 13 to provide for a stronger attachment, as is the case with the locking device 10a, which is described in more detail in the following. This would prevent the fastener/locking device from tilting when being rotated to or from a locked position.

The burglar-proof locking device 10a shown in detail in Figs 8 to 10 is a preferred embodiment of the present invention. As will be clear from the following description, the general principles underlying the form and construction of the locking device 10a in most aspects correspond to those of the fastener 10 described above. Members of the locking device 10a corresponding in function to a member of the fastener 10 are provided with similar reference numbers and a subsequent consecutive letter.

Referring now to Figs 8 to 10 the locking device 10a comprises a locking member 30 having a first end 31 and a second end 32, which are positioned along a longitudinal axis A of the locking member 10a and connected by a connection part 12a, the outer dimensions of which correspond to the inner dimensions of the holes 9 of the weather shield 6. The first end 31 projects outwardly downwards from the locking device 10a and comprises a locking means 13b, 13c, which are described in more detail below.

The second end 32 of the locking member 30 provides an engagement or gripping means in the form of a snake-eye notch 33 comprising two holes or "snake eyes" 15a, 15b, which are adapted for engagement with a special tool in the form of a snake-eye tool 34 with a corresponding snake-eye projection 35, which in Figs 8 to 10 have been inserted into the snake-eye notch 33. The snake-eye tool 34 is preferably delivered together with the window and is not sold separately. The snake-eye notch 33 is surrounded by a head part or cap 11a with a centre aperture 36 allowing for insertion there-through of the snake-eye tool 34 for rotation of the locking device 10a, the cap 11a otherwise covering the second end 32 of the locking member 30.

The cap 11a is made from a durable material, preferably zinc, and is freely rotatable about the longitudinal axis A in relation to the locking member 30. The latter is achieved in that the cap 11a comprises an inwardly extending circular circumferential projection 39, which engages a corresponding circular circumferential slot 40 provided by the locking device 10a, the cap 11a being freely rotatable in the slot 40. The slot 40 is formed between a lower surface of a head 38 (of engagement member 37, cf. below) and an upper surface of the locking member 30. The upper surface of the locking member 30 is the surface of a circular disc 41 with a diameter corresponding to an inner diameter of a mushroom-shaped and hollow covering part 42 of the cap 11a, the covering part 42 covering the second end 32 of the locking device 10a to prevent burglar access. Hereby, entrance of dirt into the cap 11a is prevented. A gasket member 21a for abutting an upper surface of the weather shield or light dome 6 is provided abutting a lower surface of the disc 41. The circumferential projection 39 extends into a cylindrical part of the cap 11a, the cylindrical part defining the centre aperture 36 of the cap 11a.

In the present embodiment the snake-eye notch 33 is provided by means of a separate engagement member 37 comprising a head 38 and a longitudinal part 43, the latter extending coaxially into and being fixed, preferably glued, to the locking member 30. The snake-eye notch 33 is provided on top of the head 38. The engagement member 37 and the locking member 30 are moulded as separate parts from Zytel 80633.

The locking means 13a is adapted to rotate into engagement with the above-mentioned corresponding locking means 19 of the sash member 3. For this purpose, the locking means 13a of the first end 31 the connection part 12a comprises two oppositely projecting, clog-shaped, radial protrusions 13b, 13c for being snap-locked, by means of a 90° axial rotation, to the corresponding locking means 19 of the sash 3. As with the fastener 10 the radial protrusions 13b, 13c each comprises an upwards-projecting outer tip 14a, 14b for engaging the corresponding locking means 19. Thus, the present embodiment of a locking device comprises two radial protrusions 13b, 13c, but it may in other embodiments comprise only a single such protrusion corresponding to the fastener 10. Accordingly, the corresponding locking means of the sash 3 preferably comprises two downwards protruding, longitudinally extending beads, each similar to the bead 19 described above, but provided on opposite sides of the hole 9.

Comparing with and referring to Fig. 3, the head part 11a has a lower, flat surface, more specifically the gasket member 21a, which in the locked position abuts the upper surface of the weather shield 6, the connection part 12 extending through a hole 9 of the weather shield 6 into the sash 3. The locking device 10a is fastened and released in a matter similar to the fastener 10 by means of rotation; however, in this instance it is rotated by means of the snake-eye tool 34 and cannot be rotated by hand.

When fastened, the only accessible parts of the locking device 10a are the cap 11a and the snake-eye notch 35. Thus, if the cap 11a is rotated, the locking member 30 is not rotated; and rotation of the locking member 30 without use of the snake-eye tool 34 is safely prevented.

The engagement member of the fastener and/or locking device and the engagement means of the sash can be provided in other forms. The tip ends may for example turn opposite ways compared to the embodiment in the drawings, still providing a suitable snap lock. The engagement member could also be provided in the form of an ordinary thread. Further, the locking device 10a could be provided with snap locks corresponding to the snap locks 17, 18 of the fastener 10.

## Claims

1. A burglar-proof locking device (10a) for fastening a light dome (6) or weather shield to a sash member of a skylight or roof window, comprising a locking member (30) having a first (31) and a second end (32), which first and second ends (31, 32) are positioned along a longitudinal axis (A) of said locking member (30), said first end (31) projecting outwardly from said locking device (10a) and comprising a locking means adapted to rotate into engagement with a corresponding locking means (19) of said sash member,
**characterized in that**
said locking means of said first end (31) comprises at least one clog-shaped, radial protrusion (13b, 13c) for being snap-locked, preferably by means of a 90° axial rotation, to said corresponding locking means (19),
wherein said second end (32) of said locking member (30) provides an engagement means, such as a snake-eye notch (33), adapted for engagement with a special tool, such as a tool (34) comprising a snake-eye projection (35), said engagement means being surrounded by a cap (11a) with a centre aperture (36) allowing for insertion there-through of said special tool into said engagement means for rotation of said locking device (10a), said cap (11a) otherwise covering said second end (32) of said locking member (30), said cap (11a) being freely rotatable about said longitudinal axis (A) in relation to said locking member (30) such as to in a fastened position of said locking device (10a) prevent rotation of said locking member (30) without use of said special tool.

2. A locking device according to claim 1, further comprising a separate engagement member (37) comprising a head (38) and a longitudinal part (43), the latter extending coaxially into and being fixed, preferably glued, to said locking member (30) from said second end (32) of said locking member (30), said head (38) comprising said special tool engagement means.

3. A locking device according to claim 1 or 2, wherein said cap (11a) comprises an inwardly extending circumferential projection (39), which engages a corresponding circumferential slot (40) provided by said locking device (10a), said cap (11a) being freely rotatable in said slot (40).

4. A locking device according to claim 2 and 3, wherein said slot (40) is formed between a lower surface of said head (38) of said engagement member (37) and an upper surface of said locking member (30).

5. A locking device according to claim 4, wherein said upper surface of said locking member (30) is a substantially circular disc (41) with a diameter substantially corresponding to an inner diameter of a preferably mushroom-shaped covering part (42) of said cap (11a), said covering part (42) covering said remaining parts of said locking device (10a), preferably a gasket member (21a) for abutting an upper surface of said light dome (6) is provided abutting a lower surface of said disc (41).

6. A locking device according to claim 4 or 5, wherein said circumferential projection (39) extends into a cylindrical part of said cap (11a), said cylindrical part defining said centre aperture (36) of said cap (11a).

7. A locking device according to any one of the previous claims, wherein said locking means of said first end (31) comprises a further, oppositely projecting, clog-shaped, radial protrusion (13c, 13b) for being snap-locked, preferably by means of a 90° axial rotation, to said corresponding locking means (19).

8. A locking device according to any one of the previous claims, wherein said at least one radial protrusion (13b, 13c) comprises an upwards projecting outer tip (14a, 14b) for engaging said corresponding locking means (19).

9. A locking device according to any one of the previous claims, wherein said locking member (30) passes through a passage or hole (9) of a peripheral panel of said light dome (6), said locking means of said locking member (30) engaging a corresponding locking member (19) of said sash member, locking said light dome (6) to said sash (3).

10. A skylight or roof window comprising a light dome (6) or weather shield, which is fastened to a sash member of said window by means of a number of burglar-proof locking devices (10a) according to any one of claims 1 to 8, and, preferably, in addition or as a supplement thereto, by means of a number of non-burglar-proof fasteners (10).

11. A skylight or roof window according to claim 10, wherein said sash (3) comprises a bottom (3a), a top (3b) and two side sash members and encloses a windowpane (5) with two layers of glazing.

## Patentansprüche

1. Einbruchsichere Verriegelungsvorrichtung (10a) zum Befestigen einer Lichtkuppel (6) oder eines Wetterschutzes an einem Flügelelement eines Oberlichts oder eines Dachfensters, umfassend ein Verriegelungselement (30) mit einem ersten (31) und einem zweiten Ende (32), die entlang einer Längsachse (A) des Verriegelungselements (30) angeordnet sind, wobei das erste Ende (31) sich von der Verriegelungsvorrichtung (10a) nach außen erstreckt und Verriegelungsmittel aufweist, die angepasst sind, um sich in Eingriff mit entsprechenden Verriegelungsmitteln (19) des Flügelelements zu drehen,
**dadurch gekennzeichnet, dass**
die Verriegelungsmittel des ersten Endes (31) wenigstens einen schuhförmigen radialen Vorsprung (13b, 13c) aufweisen, um, vorzugsweise durch eine axiale 90°-Drehung, mit den entsprechenden Verriegelungsmitteln (19) einzurasten, wobei das zweite Ende (32) des Verriegelungselements (30) ein Eingriffsmittel bereitstellt, wie beispielsweise eine Schlangenaugen-Vertiefung (33), das zum Eingriff mit einem Spezialwerkzeug angepasst ist, wie beispielsweise ein Werkzeug (34), das einen Schlangenaugen-Vorsprung (35) aufweist, wobei das Eingriffsmittel von einer Abdeckung (11a) mit einer zentralen Öffnung (36) umgeben ist, die ein Einsetzen des Spezialwerkzeugs in das Eingriffsmittel dadurch zum Drehen der Verriegelungsvorrichtung (10a) ermöglicht, wobei die Abdeckung (11a) im Übrigen das zweite Ende (32) des Verriegelungselements (30) abdeckt, wobei die Abdeckung (11a) frei drehbar um die Längsachse (A) in Bezug auf das Verriegelungselement (30) ist, um in einer befestigten Stellung der Verriegelungsvorrichtung (10a) eine Drehung des Verriegelungselements (30) ohne eine Verwendung des Spezialwerkzeugs zu verhindern.

2. Verriegelungsvorrichtung nach Anspruch 1, ferner mit einem separaten Eingriffselement (37), das einen Kopf (38) und einen länglichen Teil (43) aufweist, wobei sich Letzterer koaxial zu dem Verriegelungselement (30) von dem zweiten Ende (32) des Verriegelungselements (30) erstreckt und daran befestigt, vorzugsweise geklebt, ist, wobei der Kopf (38) das Eingriffsmittel für das Spezialwerkzeug aufweist.

3. Verriegelungsvorrichtung nach Anspruch 1 oder 2, wobei die Abdeckung (11a) einen sich nach innen erstreckenden in Umfangsrichtung verlaufenden Vorsprung (39) aufweist, der mit einem entsprechenden in Umfangsrichtung verlaufenden Schlitz (40) eingreift, der durch die Verriegelungsvorrichtung (10a) vorgesehen ist, wobei die Abdeckung (11a) in dem Schlitz (40) frei drehbar ist.

4. Verriegelungsvorrichtung nach Anspruch 2 und 3, wobei der Schlitz (40) zwischen einer unteren Fläche des Kopfs (38) des Eingriffselements (37) und einer oberen Fläche des Verriegelungselements (30) gebildet ist.

5. Verriegelungsvorrichtung nach Anspruch 4, wobei die obere Fläche des Verriegelungselements (30) eine im Wesentlichen kreisförmige Scheibe (41) mit einem Durchmesser ist, der im Wesentlichen einem inneren Durchmesser eines vorzugsweise pilzförmigen Abdeckungsteils (42) der Abdeckung (11a) entspricht, wobei der Abdeckungsteil (42) die übrigen Teile der Verriegelungsvorrichtung (10a), vorzugsweise ein Dichtungselement (21a) zur Anlage an einer oberen Fläche der Lichtkuppel (6), das vorgesehen ist, an einer unteren Fläche der Scheibe (41) anzuliegen, abdeckt.

6. Verriegelungsvorrichtung nach Anspruch 4 oder 5, wobei der in Umfangsrichtung verlaufende Vorsprung (39) sich in einen zylindrischen Teil der Abdeckung (11a) erstreckt, wobei der zylindrische Teil die zentrale Öffnung (36) der Abdeckung (11a) bildet.

7. Verriegelungsvorrichtung nach einem der vorhergehenden Ansprüche, wobei die Verriegelungsmittel des ersten Endes (31) einen weiteren, sich entgegengesetzt erstreckenden schuhförmigen radialen Vorsprung (13c, 13b) aufweisen, um, vorzugsweise durch eine axiale 90°-Drehung, mit den entsprechenden Verriegelungsmitteln (19) einzurasten.

8. Verriegelungsvorrichtung nach einem der vorhergehenden Ansprüche, wobei der wenigstens eine radiale Vorsprung (13b, 13c) eine sich nach oben erstreckende äußere Spitze (14a, 14b) zum Eingriff mit den entsprechenden Verriegelungsmitteln (19) aufweist.

9. Verriegelungsvorrichtung nach einem der vorhergehenden Ansprüche, wobei das Verriegelungselement (30) durch einen Durchgang oder eine Bohrung (9) eines Randpanels der Lichtkuppel (6) verläuft, wobei die Verriegelungsmittel des Verriegelungselements (30) mit einem entsprechenden Verriegelungselement (19) des Flügelelements eingreifen, so dass die Lichtkuppel (6) mit dem Flügel (3) verriegelt wird.

10. Oberlicht oder Dachfenster mit einer Lichtkuppel (6) oder einem Wetterschutz, die an einem Flügelelement des Fensters durch eine Anzahl von einbruchsicheren Verriegelungsvorrichtungen (10a) nach einem der Ansprüche 1 bis 8 und, vorzugsweise, zusätzlich oder als Ergänzung dazu, mittels einer Anzahl von nicht-einbruchsicheren Befestigungselementen (10) befestigt sind.

11. Oberlicht oder Dachfenster nach Anspruch 10, wobei der Flügel (3) ein unteres (3a), ein oberes (3b) und zwei seitliche Flügelelemente aufweist und eine Fensterscheibe (5) mit zwei Glaslagen umgibt.

## Revendications

1. Dispositif de verrouillage incrochetable (10a) permettant d'attacher un dôme d'éclairage (6) ou une protection étanche à un élément de châssis de lanterneau ou de fenêtre de toit, comportant un élément de verrouillage (30) présentant une première (31) et une seconde extrémité (32), lesquelles première et seconde extrémités (31, 32) sont positionnées le long d'un axe longitudinal (A) dudit élément de verrouillage (30), ladite première extrémité (31) s'avançant vers l'extérieur à partir dudit dispositif de verrouillage (10a) et comportant des moyens de verrouillage conçus pour tourner et venir en prise avec des moyens de verrouillage correspondants (19) dudit élément de châssis,
**caractérisé en ce que**
lesdits moyens de verrouillage de ladite première extrémité (31) comprennent au moins une partie radiale en saillie, configurée en forme de sabot (13b, 13c) destinée à se verrouiller par encliquetage, de préférence, au moyen d'une rotation axiale de 90°, sur lesdits moyens de verrouillage correspondants (19),
dans lequel ladite seconde extrémité (32) dudit élément de verrouillage (30) fournit des moyens de mise en prise, tels qu'une encoche en oeil de serpent (33), conçue pour venir en prise avec un outil spécial, tel qu'un outil (34) comportant une saillie en oeil de serpent (35), lesdits moyens de mise en prise étant entourés par un capuchon (11a) doté d'une ouverture centrale (36) permettant d'y insérer ledit outil spécial dans lesdits moyens de mise en prise pour faire tourner ledit dispositif de verrouillage (10a), ledit capuchon (11a) recouvrant par ailleurs ladite seconde extrémité (32) dudit élément de verrouillage (30), ledit capuchon (11a) pouvant tourner librement autour dudit axe longitudinal (A) par rapport au dit élément de verrouillage (30) de façon à empêcher, dans une position fixée dudit dispositif de verrouillage (10a), la rotation dudit élément de verrouillage (30) sans l'utilisation dudit outil spécial.

2. Dispositif de verrouillage selon la revendication 1 comportant, de plus, un élément de mise en prise séparé (37) comprenant une tête (38) et une partie longitudinale (43), cette dernière s'étendant de façon coaxiale dans ledit, et étant fixée, de préférence, collée au dit, élément de verrouillage (30) à partir de ladite seconde extrémité (32) dudit élément de verrouillage (30), ladite tête (38) comportant lesdits moyens de mise en prise de l'outil spécial.

3. Dispositif de verrouillage selon la revendication 1 ou 2, dans lequel ledit capuchon (11a) comprend une partie circonférentielle en saillie s'étendant vers l'intérieur (39), laquelle s'engage avec une fente circonférentielle correspondante (40) fournie par ledit dispositif de verrouillage (10a), ledit capuchon (11a) étant capable de tourner librement dans ladite fente (40).

4. Dispositif de verrouillage selon la revendication 2 et 3, dans lequel ladite fente (40) est formée entre une surface inférieure de ladite tête (38) dudit élément de mise en prise (37) et une surface supérieure dudit élément de verrouillage (30).

5. Dispositif de verrouillage selon la revendication 4, dans lequel ladite surface supérieure dudit élément de verrouillage (30) est un disque essentiellement circulaire (41) doté d'un diamètre correspondant essentiellement à un diamètre intérieur d'une partie de couverture configurée, de préférence, en forme de champignon (42) dudit capuchon (11a), ladite partie de couverture (42) couvrant lesdites parties restantes dudit dispositif de verrouillage (10a), de préférence un élément d'étanchéité (21a) pour venir en butée contre une surface supérieure dudit dôme d'éclairage (6), est prévu en butée contre une surface inférieure dudit disque (41).

6. Dispositif de verrouillage selon la revendication 4 ou 5, dans lequel ladite partie circonférentielle en saillie (39) s'étend dans une partie cylindrique dudit capuchon (11a), ladite partie cylindrique définissant ladite ouverture centrale (36) dudit capuchon (11a).

7. Dispositif de verrouillage selon l'une quelconque des revendications précédentes, dans lequel lesdits moyens de verrouillage de ladite première extrémité (31) comprennent une partie radiale en saillie supplémentaire, configurée en forme de sabot, faisant saillie à l'opposé (13c, 13b), destinée à se verrouiller par encliquetage, de préférence, au moyen d'une rotation axiale de 90°, sur lesdits moyens de verrouillage correspondants (19).

8. Dispositif de verrouillage selon l'une quelconque des revendications précédentes, dans lequel ladite, au moins une, partie radiale en saillie (13b, 13c) comporte une pointe extérieure s'avançant vers le haut (14a, 14b) pour s'engager avec lesdits moyens de verrouillage correspondants (19).

9. Dispositif de verrouillage selon l'une quelconque des revendications précédentes, dans lequel ledit élément de verrouillage (30) passe à travers un passage ou un trou (9) d'un panneau périphérique dudit dôme d'éclairage (6), lesdits moyens de verrouillage dudit élément de verrouillage (30) s'engageant avec un élément de verrouillage correspondant (19) dudit élément de châssis, verrouillant ledit dôme d'éclairage (6) sur ledit châssis (3).

10. Lanterneau ou fenêtre de toit comportant un dôme d'éclairage (6) ou une protection étanche, lequel est fixé à un élément de châssis de ladite fenêtre au moyen d'un certain nombre de dispositifs de verrouillage incrochetables (10a) selon 1"une quelconque des revendications 1 à 8, et, de préférence, en plus ou en complément de ceux-ci, au moyen d'un certain nombre de dispositifs de fixation qui ne sont pas inviolables (10).

11. Lanterneau ou fenêtre de toit selon la revendication 10, dans lequel ledit châssis (3) comporte un élément inférieur (3a), un élément supérieur (3b) et deux éléments de châssis latéraux et entoure une vitre (5) dotée de deux couches de vitrage.
